(19) Europäisches Patentamt
European Patent Office
Office européen des brevets

(11) Veröffentlichungsnummer : **0 019 151**
**B1**

(12) **EUROPÄISCHE PATENTSCHRIFT**

(45) Veröffentlichungstag der Patentschrift : **03.02.82**

(51) Int. Cl.³ : **C 09 D 11/10**, C 09 B 63/00, C 08 G 8/04

(21) Anmeldenummer : **80102365.6**

(22) Anmeldetag : **02.05.80**

# (54) Verwendung von Isobutyraldehyd-Phenol-Polykondensaten als Verlackungsmittel für basische Farbstoffe.

(30) Priorität : **09.05.79 DE 2918593**

(43) Veröffentlichungstag der Anmeldung : **26.11.80 (Patentblatt 80/24)**

(45) Bekanntmachung des Hinweises auf die Patenterteilung : **03.02.82 Patentblatt 82/05**

(84) Benannte Vertragsstaaten : **DE FR GB IT NL**

(56) Entgegenhaltungen :
**DE - A - 2 327 425**
**DE - A1 - 2 805 763**
**FR - A - 1 571 366**
**FR - A - 2 109 906**

(73) Patentinhaber : **BASF Aktiengesellschaft**
**Carl-Bosch-Strasse 38**
**D-6700 Ludwigshafen (DE)**

(72) Erfinder : **Bankowsky, Heinz-Hilmar**
**Londoner Ring 11**
**D-6700 Ludwigshafen (DE)**
Erfinder : **Segnitz, Aldolph, Dr.**
**Im Roehrich 46**
**D-6702 Bad Duerkheim 1 (DE)**
Erfinder : **Peters, Karl-Clemens, Dr.**
**Otto-Schmidt-Gross-Strasse 4**
**D-6702 Bad Duerkheim 1 (DE)**

**EP 0 019 151 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Verwendung von Isobutyraldehyd-Phenol-Polykondensaten als Verlackungsmittel für basische Farbstoffe

Die Erfindung betrifft die Verwendung von Isobutyraldehyd-Phenol-Harzen des Novolak-Typs als Verlackungsmittel, wodurch es möglich wird, weitgehend wasserfeste Flexodruckfarben mit basischen Farbstoffen herzustellen.

Zur Herstellung von alkoholischen Flexodruckfarben werden Harze verwendet, die mit den basischen Farbstoffen einen weitgehend wasserunlöslichen aber alkohollöslichen Komplex bilden. Diesen Vorgang nennt man im allgemeinen eine Verlackung.

Üblicherweise werden für diesen Zweck Verlackungsmittel wie Tannin oder spezielle Phenol-Formaldehyd-Harze verwendet.

Nachteilig bei den bekannten Produkten war bisher häufig die nur selektive Verträglichkeit mit wenigen ausgewählten basischen Farbstoffen, die oft noch zu schlechte Wasserechtheit und Verdünnbarkeit der Flexodruckfarben mit Alkoholen, die noch Wasser enthalten (80- bis 96 %iger Alkohol).

Das Ziel der Erfindung bestand darin, Mittel zu finden, welche die obigen Nachteile nicht aufweisen, wasserfest sind, mit möglichst allen basischen Farbstoffen anwendbar sind und sich mit Alkohol, der noch Wasser enthält, verdünnen lassen.

Das Ziel wurde mit Verwendung von Isobutyraldehyd-Phenol-Polykondensaten des Novolak-Typs, die ein Molverhältnis von Aldehyd zu Phenol von etwa (0.6 bis 0.9) : 1 aufweisen, und die durch Kondensation von Isobutyraldehyd und einem Phenol in Gegenwart eines sauren Katalysators erhalten werden, als Verlackungsmittel für basische Farbstoffe erreicht.

Die Herstellung der Harze erfolgt nach an sich bekannten Methoden durch kondensation von Phenolen mit Isobutyraldehyd in Gegenwart von Säuren, wobei unter Säuren Mineralsäuren, wie Schwefelsäure oder Salzsäure, aromatische Sulfonsäuren, wie p-Toluolsulfonsäure oder Lewis-Säuren, wie Phosphorhalogenide, $BF_3$ oder $AlCl_3$, zu verstehen sind.

Eine Methode, die es gestattet, besonders vorteilhafte Produkte herzustellen, ist Gegenstand eines älteren Vorschlags (Patentanmeldung P 28 05 763.8), wonach man die Kondensation mit überschüssigem Butyraldehyd in Gegenwart eines Phosphorhalogenids, Schwefelsäure, Chlorwasserstoffsäure oder einer aromatischen Sulfonsäure vornimmt und den überschüssigen Isobutyraldehyd abdestilliert.

Dabei legt man entweder das Phenol vor und setzt den Isobutyraldehyd nach Maßgabe der Umsetzung bis zum Vorliegen eines Überschusses zu, oder man führt Phenol und Isobutyraldehyd gleichzeitig zu.

Diese Methode führt zur Harzen, die Erweichungspunkte von ca. 60 bis 180 °C aufweisen. Der überschüssige Isobutyraldehyd kann in einfacher Weise destillativ von den gebildeten Harzen abgetrennt werden.

Sämtliche Methoden, insbesondere aber die letztgenannte, ergeben Novolake, bei denen ein Molverhältnis Aldehyd zu Phenol wie ca. 0.6 : 1 bis 0.9 : 1 besteht.

Nach der vorgenannten Methode legt man entweder das Phenol und den Katalysator vor und führt Isobutyraldehyd fortlaufend oder stufenweise zu, wobei drucklos oder unter Druck gearbeitet werden kann ; man kann auch die Reaktionsteilnehmer gleichzeitig dem vorgesehenen Reaktionsgefäß im Maße der Umsetzung oder auf einmal zuführen. Das zugegebene Molverhältnis Isobutyraldehyd zu Phenol beträgt bevorzugt 1.2 : 1 bis 1.3 : 1. Im Kondensat hingegen findet man bei Einhaltung der angegebenen Reihenfolge ein Molverhältnis von weniger als 1.

Zwar ist die Verwendung eines zusätzlichen, an der Reaktion nicht beteiligten Lösungmittels, z.B. Toluol möglich, mit dem das entstehende Wasser jeweils bei niedriger Temperatur abgetrennt (« ausgekreist ») werden kann.

Diese Maßnahme verursacht aber Kosten, da mehr destilliert werden muß, so daß man es vorzieht, lediglich überschüssigen Isobutyraldehyd als Lösungsmittel zu verwenden.

Es ist empfehlenswert, nach der Letzten Zugabe von Isobutyraldehyd bzw. nach dem Nachlassen der Reaktion noch eine Weile die Temperatur erhöht zu halten, z.B. bei bis zu 120 °C. Danach wird im allgemeinen so lange abdestilliert (wobei ebenfalls eine Nachkondensation stattfinden kann), bis alle flüchtigen Produkte entfernt sind. Das so hergestellte Harz sollte vor der Destillation neutralisiert werden.

Die Neutralisation hat den Zweck, beim späteren Arbeiten mit dem Novolak-Harz (z.B. bei der Entfernung der hochsiedenden Begleitstoffe) eine Rückreaktion zu verhindern. Die Neutralisation geschieht am einfachsten mit etwas Ammoniak ; falls man Alkalilauge verwendet, müssen in manchen Fällen die Neutralsalze mit Wasser ausgewaschen werden.

Die Erweichungsprodukte verschiedener, so erhältlicher Kondensate liegen im allgemeinen zwischen 60, bevorzugt 90 und 180 °C Phenole, die zur Herstellung der erfindungsgemäß verwendeten Phenol-Isobutyraldehyd-Kondensate benutzt werden können, sind insbesondere solche der allgemeinen Formel

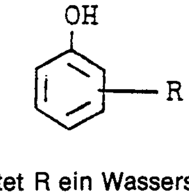

Hierin bedeutet R ein Wasserstoff-, Chlor- oder Bromatom oder eine Alkylgruppe mit 1 bis 18 C-Atomen in irgendeiner ihrer isomeren Formen, die in der o-, m- oder p-Stellung zur Hydroxylgruppe stehen, eine alicyclische Gruppe mit 5 bis 18 C-Atomen, z.B. die Cyclopentyl-, Cyclohexyl-,

Methylcyclohexyl- oder Butylcyclohexylgruppe, eine aromatische Gruppe oder Aralkylgruppe mit 6 bis 18 C-Atomen, wie die Phenyl-, α-Methylbenzyl-, Benzyl- oder Cumylgruppe. Weiterhin können phenolische Alkyl-, Cycloalkyl-, Aryl- und Aralkylketone sowie phenolische Alkyl-, Cycloalkyl-, Aryl- und Aralkylcarbonsäuren verwendet werden.

Geeignete substituierte Phenole sind : p-tert-Butylphenol, p-sec-Butylphenol, p-tert-Hexylphenol, p-Isooctylphenol ; p-Phenylphenol, p-Benzylphenol (Bisphenol A), p-Cyclohexylphenol, p-Decylphenol, p-Dodecylphenol, p-Tetradecylphenol, p-Octadecylphenol, p-Nonylphenol, p-Methylphenol, p-β-Naphthylphenol, p-Naphthylphenol, p-Pentadecylphenol, p-Cetylphenol, p-Cumylphenol, p-Hydroxyacetophenon, p-Hydroxybenzophenon, mit Limonen oder Ölsäure alkylierte Phenole sowie die entsprechenden o- und m-Derivate, wie m-Butylphenol und o-Butylphenol und Gemische derartiger Phenole.

Aus dem Vorstehenden ist ersichtlich, daß praktisch jedes Phenol zur Herstellung der erfindungsgemäß einsetzbaren Phenolharze verwendet werden kann, sofern es eine in bekannter Weise reaktionsfähige Stelle im Molekül besitzt, welche die Ausbildung von — substituierten — Methylenbrücken unter Bildung eines Kondensationsproduktes ermöglicht. Man kann reine, raffinierte Phenole verwenden, doch ist dies nicht immer erforderlich. Beispielsweise kann man Phenole alkylieren und hierauf mit dem Aldehyd unter Bildung eines Rohproduktes zur Umsetzung bringen, welches etwas polyalkylierte sowie nichtalkylierte Phenole enthält. Man kann auch Gemische der vorgenannten Phenole verwenden.

Als Katalysatoren kommen Phosphortrichlorid, Phosphoroxychlorid und Phosphorpentachlorid, Schwefelsäure, aromatische Sulfonsäuren wie p-Toluolsulfonsäure, aber auch konzentrierte Salzsäure in Betracht. Die erforderliche Menge an Katalysator beträgt im allgemeinen weniger als 5, insbesondere 0,1 bis 1 Gew.%.

Die auf diese Weise erhaltenen Harze werden in üblicher Weise mit basischen Farbstoffen und Alkohol, der bis zu 20 Volumenprozent Wasser enthalten kann, zu Flexodruckfarben verarbeitet.

Hierbei werden je nach gewünschter Konzentration der Druckfarbe 5 bis 20 Gewichtsteile basischer Farbstoffe mit 10 bis 40 Gewichtsteilen Phenol-Isobutyraldehyd-Harz und 25 bis 40 Gewichtsteilen Alkohol gemischt und unter mechanischer Bewegung eine Lösung hergestellt. Die Dauer des Lösevorgangs richtet sich nach der Art des Farbstoffs, der gewünschten Konzentration, der Art des verwendeten Harzes un der Temperatur. Zumeist arbeitet man bei Raumtemperatur ; die Lösedauer beträgt dann ca. 2 bis 20 Stunden. Man kann auch bei höherer Temperatur in geschlossenen Gefäßen erhitzen, wobei der Lösevorgang auf unter 12 Stunden verkürzt werden kann.

Harze, die erfindungsgemäß zum Einsatz kommen können, sind grundsätzlich alle Harze, jedoch bevorzugt solche, die sich vom Phenol selbst herleiten, und die Erweichungspunkte von 90 bis 180 °C aufweisen ; auch Harze, die sich von z.B. p-tert-Butylphenol oder Octylphenol herleiten, sind gut geeignet.

Farbstoffe, die mit diesen Harzen zusammen ausgezeichnete Flexodruckfarben ergeben, sind grundsätzlich alle basischen Farbstoffe, von denen bevorzugt Diphenylmethan-, Monoazo-, Xanthen-, und Triarylmethan-Farbstoffe oder deren Mischungen zu nennen sind. Unter « Alkohol », dem Lösungsmittel, ist Äthanol zu verstehen.

Die erhaltenen Flexodruckfarben sind hervorragend wasserfest und mit Alkohol, der bis zu 20 Vol.% Wasser enthalten kann, in jedem Verhältnis verdünnbar.

Mit den bisher üblicherweise verwendeten Phenol-Formaldehyd-Harzen erhält man zwar ähnlich gute Wasserfestigkeiten wie mit den erfindungsgemäß zu verwendenden Harzen.

Sie haben aber den erheblichen Nachteil, daß sie mit Triarylmethanfarbstoffen nicht in jedem Verhältnis mischbar sind, d.h. in vielen Fällen tritt keine Lösung ein. Ein weiterer Nachteil besteht — wiederum in Verbindung mit Triarylmethanfarbstoffen — darin, daß sich beim Verdünnen mit wasserhaltigem Alkohol (20 Vol.% Wasser) ein Niederschlag bildet. Da das Verdünnen aber ein übliches Verfahren zur Einstellung der gewünschten Druckviskosität an der Maschine ist, können sich durch solche Niederschläge erhebliche Schwierigkeiten einstellen. Schließlich lassen sich mit den Harzen auf Basis Formaldehyd-Phenol keine Zubereitung mit Diphenylmethan-Farbstoffen herstellen, die mehr als 7 bis 8 Gew.% an diesen Farbstoffen enthalten.

Alle diese Nachteile treten mit den erfindungsgemäß zu verwendenden Harzen nicht auf.

Die nun folgenden Beispiele erläutern die Erfindung. Angegebene Teile sind Gewichtsteile.

A. Herstellungsbeispiele

Beispiel a

47 kg (0,5 kg-Mol) Phenol und 0,5 kg Phosphoroxychlorid werden geschmolzen. Unter Rühren läßt man langsam 43,2 kg (0,6 kg-Mol) Isobutyraldehyd zulaufen, so daß die Reaktionswärme ausreicht, um das Gemisch am Sieden zu halten (Rückflußkühler). Es wird während 4 Stunden auf 100 °C nacherhitzt und neutralisiert und anschließend werden die flüchtigen Bestandteile bis zu einer Sumpftemperatur von 160 °C im Vakuum abdestilliert. Auch in den folgenden Beispielen wird vor der Destillation jeweils neutralisiert. Man erhält 80 kg Harz mit einem Erweichungspunkt von 120 °C.

Beispiel b

62,8 g (0,67 kg-Mol) Phenol, 1,1 kg Phosphoroxychlorid und 62,4 kg (0,87 kg-Mol) Isobutyraldehyd werden aus zwei getrennten Behältern gleichzeitig im vorgeheizten Kessel (80 °C)

schnell zudosiert. Zunächst wird bei Normaldruck, dann im Vakuum bis 160 °C/33 Torr destilliert. Man erhält 102 kg Harz vom Erweichungspunkt 105 °C.

Beispiel c

200 kg Phenol (2,13 kg-Mol) und 2,13 kg Phosphortrichlorid werden auf 50 °C erwärmt und unter Rühren langsam mit 183,8 kg Isobutyraldehyd (2,55 kg-Mol) versetzt. Das Gemisch wird 4 Stunden am Sieden gehalten. Anschließend werden die flüchtigen Bestandteile bis zu einer Sumpftemperatur von 160 °C im Vakuum abdestilliert. Man erhält so 284 kg hellgelbes, durchsichtiges Harz mit einem Erweichungspunkt von 110 °C.

Beispiel d

150 kg (1 kg-Mol) p-tert-Butylphenol und 1 kg Phosphorpentachlorid werden geschmolzen. In die Schmelze läßt man schnell 79 kg (1,1 kg-Mol) Isobutyraldehyd einlaufen und erhitzt 10 Stunden am Rückfluß. Flüchtige Bestandteile werden dann bis zu einer Sumpftemperatur von 140 °C (Normaldruck) abdestilliert. Man erhält 201 kg eines Harzes mit einem Erweichungspunkt von 90 °C.

Beispiel e

47 kg (0,5 kg-Mol) Phenol werden mit 36 kg (0,5 kg-Mol) Isobutyraldehyd und 1,6 kg Phosphoroxytrichlorid gemischt. Die exotherme Reaktion wird durch Wasserkühlung gemäßigt. Nach dem Abklingen der Reaktion wird langsam auf Rückflußtemperatur erhitzt und dann 4 Stunden am Sieden erhalten (Rückflußkühler). Anschließend werden die flüchtigen Bestandteile bis zu einer Sumpftemperatur von 160 °C im Vakuum abdestilliert. Man erhält 74 kg Harz mit einem Erweichungspunkt von 100 °C.

Beispiel f

110 kg (1 kg-Mol) Brenzkatechin werden mit 108 kg (1,5 kg-Mol) Isobutyraldehyd und 3 Litern konzentrierter Salzsäure versetzt. Man erhitzt während 2 Stunden am Rückfluß, bis eine Innentemperatur von 120 °C erreicht wird. Diese Temperatur wird weitere 3 Stunden gehalten. Flüchtige Bestandteile werden bis zu einer Innentemperatur von 130 °C abdestilliert. Man erhält 185 kg Harz mit einem Erweichungspunkt von 125 °C.

Beispiel g

55 kg (0,5 kg-Mol) Hydrochinon werden mit 36 kg (0,5 kg-Mol) Isobutyraldehyd und 1 Liter konzentrierter Salzsäure versetzt und zunächst leicht gekühlt. Dann wird vorsichtig auf Rückfluß gebracht. Dabei wird innerhalb von 4 Stunden eine Innentemperatur von 120 °C erreicht. Flüchtige Bestandteile werden bis zu einer Innentemperatur von 130 °C abdestilliert. Man erhält 79 kg Harz vom Erweichungspunkt 130 °C.

Beispiel h

206 kg (1 kg-Mol) Octylphenol und 5 kg Phosphortrichlorid werden geschmolzen. Unter Rühren läßt man langsam 79,2 kg (1,1 kg-Mol) Isobutyraldehyd in dem Maße zulaufen, daß die Reaktionswärme ausreicht, um das Gemisch am Sieden zu halten (Rückflußkühler). Die Temperatur wird langsam erhöht bis 150 °C erreicht sind, wonach bei dieser Temperatur 12 Stunden nacherhitzt wird. Anschließend werden die flüchtigen Bestandteile bis zu einer Sumpftemperatur von 180 °C im Vakuum abdestilliert, bis eine herausgenommene Probe in der Kälte brüchig ist. Man erhält 84 kg harz mit einem Erweichungspunkt von 90 °C.

Beispiel i

55 kg (0,5 kg-Mol) Hydrochinon werden mit 43,2 kg (0,6 kg-Mol) Isobutyraldehyd und 1 kg Phosphoroxytrichlorid versetzt und zunächst leicht gekühlt. Dann wird vorsichtig auf Rückfluß gebracht. Dabei wird innerhalb von 4 Stunden eine Innentemperatur von 120 °C erreicht. Flüchtige Bestandteile werden bis zu einer Innentemperatur von 130 °C abdestilliert. Man erhält 79 kg Harz vom Erweichungspunkt 130 °C.

Beispiel j

470 g (5 Mol) Phenol werden mit 540 g (7,5 Mol) Isobutyraldehyd und 15 ml Phosphoroxytrichlorid in den Autoklaven eingefüllt. Es werden 30 atm Stickstoff aufgepresst und unter Schütteln auf 100 °C geheizt. Es ergibt sich eine Druckzunahme auf 40 atm. Nach Erkalten auf Raumtemperatur wird entspannt und der zähe, backige Inhalt ausgetragen. Nach Abdestillieren der flüchtigen Bestandteile bis zu einer Sumpftemperatur von 140 °C erhält man 827 g Harz vom Erweichungspunkt 100 °C.

Beispiel k

94 g (1 Mol) Phenol, 144 g (2 Mol) Isobutyraldehyd, 120 ml Toluol und 5 ml Phosphoroxytrichlorid werden solange am Wasserabscheider unter Rückfluß gekocht, bis alles Wasser (18 g) ausgetrieben ist. Im Wasserstrahlvakuum werden alle flüchtigen Bestandteile bis zur Sumpftemperatur von 160 °C abdestilliert. Es bleiben 166 g eines Harzes vom Erweichungspunkt 100 °C zurück. In dieser Vorschrift kann Toluol ohne weiteres durch z.B. Benzol oder Xylol ersetzt werden.

B. Verwendungsbeispiele

Die verlackende Wirkung der Isobutyraldehyd-Phenol-Harze wird durch die Bestimmung der Wasserfestigkeit von Drukken nach DIN 16 524,

Blatt 2 ermittelt. Zu diesem Zweck wird der fertige Druck, der den Farbstoff und das Harz enthält, mit einem nassen Filterpapier umwickelt und über Nacht bei Raumtemperatur (20 °C) gelagert und mit einem Gewicht von 1 kg belastet. Die Wasserfestigkeit wird anschließend aufgrund der Anfärbung des Filterpapiers nach dem fünfstufigen Graumaßstab beurteilt.

Beispiel 1

6,5 Teile Auramin FA (C.I. Nr. 41 000)
6,5 bis 26 Teile Isobutyraldehyd/Phenol-Harz gemäß Beispiel a
87 bis 67,5 Teile Äthanol 96 %-ig

Die Komponenten werden zusammen eingewogen und in einem geschlossenen Gefäß durch Rollen über Nacht gelöst. Die Wasserfestigkeit der Druckfarbe wird gemäß DIN 16 524, Blatt 2 geprüft. Zu diesem Zweck werden Abrakelungen der Druckfarbe, die 24 Stunden bei Raumtemperatur gelagert wurden, mit feuchtem Filterpapier unter Belastung in Berührung gebracht und 24 Stunden gelagert. Die Anfärbung des Filterpapiers ist ein Maß für die Wasserfestigkeit und wird nach der 5-stufigen Grauskala beurteilt.
Wasserechtheit : 3-4

Beispiel 2

Anstelle des im Beispiel 1 verwendeten Auramin FA läßt sich auch Rhodamin FB (C.I. Nr. 45 160) einsetzen, ohne daß schlechtere Ergebnisse in der Wasserfestigkeit erzielt werden.
Wasserechtheit : 4-5

Beispiel 3

Verwendet man jedoch Viktoriablau FB (C.I. Nr. 44 045), so reicht zur Erzielung der optimalen Wasserfestigkeit die Hälfte der üblicherweise verwendeten Harzmenge aus.
Wasserechtheit : 4-5

Beispiel 4

Um eine hochkonzentrierte Flexodruckfarbe mit basischen Farbstoffen herzustellen, arbeitet man zweckmäßigerweise nach folgendem Rezept :

10 bis 15 Teile Auramin FA (C.I. Nr. 41 000)
20 bis 30 Teile Isobutyraldehyd/Phenol-Harz gemäß Beispiel a
70 bis 55 Teile Äthanol 96 %-ig

Diese Druckfarbe läßt sich einwandfrei mit 80- bzw. 96 %-igem Äthanol auf die gewünschte Farbstärke verdünnen, ohne einen Rückstand zu bilden.
Wasserechtheit : 3-4

Beispiel 5

Anstelle des im Beispiel 4 angegebenen Farbstoffs Auramin FA wird Viktoriablau FB (C.I. Nr. 44 045) eingesetzt. Auch diese Druckfarbe ist einwandfrei und ohne Rückstandsbildung mit 80- und 90 %-igem Äthanol verdünnbar.
Wasserechtheit : 4-5

## Anspruch

Verwendung von Isobutyraldehyd-Phenol-Polykondensation des Novolak-Typs, die ein Molverhältnis von Aldehyd zu Phenol von (0.6 bis 0.9) : 1 aufweisen, und die durch kondensation von Isobutyraldehyd und einem Phenol in Gegenwart eines sauren Katalysators erhalten werden, als Verlackungsmittel für basische Farbstoffe.

## Claim

Use of isobutyraldehyde-phenol polycondensates of the novolak type, in which the molar ratio of aldehyde to phenol is from 0.6 to 0.9 : 1 and which are obtained by condensation of isobutyraldehyde and a phenol in the presence of an acid catalyst, as precipitants for basic dyes.

## Revendication

Utilisation, comme agents de laquage pour colorants basiques, de polycondensats isobutyraldéhyde-phénol du type novolaque présentant un rapport molaire aldéhyde : phénol de (0,6 à 0,9) : 1, et qui sont obtenus par condensation d'isobutyraldéhyde avec un phénol en présence d'un catalyseur acide.